(19) Europäisches Patentamt
European Patent Office
Office européen des brevets

(11) Veröffentlichungsnummer: **0 066 290**
**A2**

# (12) EUROPÄISCHE PATENTANMELDUNG

(21) Anmeldenummer: 82104801.4

(22) Anmeldetag: 01.06.82

(51) Int. Cl.³: C 01 F 7/56
C 02 F 1/52

(30) Priorität: 02.06.81 ES 502701

(43) Veröffentlichungstag der Anmeldung: 08.12.82 Patentblatt 82/49

(84) Benannte Vertragsstaaten: AT BE CH DE FR GB IT LI LU NL SE

(71) Anmelder: Feldmann-Chemie GmbH
Salzstrasse 18
D-8084 Inning / Ammersee(DE)

(72) Erfinder: Walzer, Michael
Schweighofstrasse 14c
D-8910 Landsberg(DE)

(72) Erfinder: Feldmann, Hagen
Wörthseestrasse 23
D-8031 Wörthsee(DE)

(74) Vertreter: Flügel, Otto, Dipl.-Ing. et al,
Dipl.-Ing. Otto Flügel Dipl.-Ing. Manfred Säger
Patentanwälte Cosimastrasse 81 Postfach 810 540
D-8000 München 81(DE)

## (54) Verfahren zur Herstellung eines flüssigen, wässrigen anorganischen Flockungsmittels.

(57) Das Verfahren dient zur Herstellung eines flüssigen, wässrigen sowie anorganischen Flockungsmittels auf der Basis von Aluminiumhydroxychloriden durch Umsetzung eines Aluminiumsalzes mit einem basifizierenden Reagens. Hierzu wird eine wässrige, saure Aluminiumchloridlösung unter Rühren mit einer wässrigen Aluminiumsulfatlösung gemischt und diese Mischung 6 - 12 bzw. 24 Stunden stehen gelassen. Anschließend wird in diese Mischung unter kräftigem Rühren bei Raumtemperatur Natriummetasilikat und/oder eine wässrige Ammoniaklösung und/oder eine 15%ige Natronlauge zugegeben, und zwar stets in der Weise, daß kein Aluminiumhydroxyd ausfällt.

EP 0 066 290 A2

INCOMPLETE DOCUMENT

Die Erfindung betrifft ein Verfahren zur Herstellung eines flüssigen, wäßrigen anorganischen Flockungsmittels auf der Basis von Aluminiumhydroxychloriden und die Verwendung eines derartigen Flockungsmittels für die Wasseraufbereitung.

Mehr oder weniger stark basische Aluminiumhydroxychloride und Verfahren zu deren Herstellung sind seit längerem bekannt. Es hat sich gezeigt, daß die verschiedenen Hydroxychloride mit durchaus ähnlichen allgemeinen Formeln sich sehr unterschiedlich verhalten können und daß dieses unterschiedliche Verhalten mit dem jeweiligen Herstellungsverfahren zusammenzuhängen scheint. Man nimmt daher an, daß in Lösung verschiedene polykondensierte Ionen mit komplexem Aufbau vorliegen, die sich je nach der Art der Herstellung unterscheiden können.

Wäßrige Lösungen von Aluminiumhydroxychloriden sind in der Regel nicht sehr beständig. Ihre Beständigkeit nimmt ab, wenn Konzentration und Basizität zunehmen und wenn mehrwertige Anionen, wie $SO_4^{--}$ vorhanden sind.

Aus der US-PS 3 544 476 ist ein Verfahren zur Herstellung derartiger Lösungen bekannt. Man geht dabei aus von Lösungen, die beim Aufschluß von natürlichen aluminiumhaltigen Stoffen mit einem Gemisch aus Salzsäure und Schwefelsäure erhalten werden, neutralisiert diese Lösungen partiell mit Kalziumcarbonat, trennt den entstandenen Kalziumsulfatniederschlag und damit die überschüssigen Sulfationen ab und unterwirft diese Lösungen einer Alterung.

Bei einem anderen Verfahren, das aus der US-PS 3 929 666 bekannt ist, werden ein Alkalialuminat mit Natriumsulfat und Aluminiumchlorid in bestimmten Mengenverhältnissen umgesetzt, man erhält dabei ein Gel. Dieses wird durch mäßiges Erhitzen verflüssigt, wodurch man die gewünschte sulfathaltige Lösung von Aluminiumhydroxychloriden erhält. Nachteilig an diesem Verfahren ist die Tatsache, daß als

Zwischenstufe ein Gel entsteht und deswegen erhitzt werden muß, was die Qualität des gewünschten Endproduktes beeinträchtigt. Nachteilig an dem zuerst geschilderten Verfahren der US-PS 3 544 476 ist die Abfiltrierung des Kalziumsulfat-Niederschlages.

Aus der Deutschen Auslegeschrift 2 630 768 ist ein Verfahren zur Herstellung von Lösungen basischer Aluminiumhydroxychloride bekannt, bei dem man Ammonium- oder Alkaliverbindungen bei einer Temperatur unterhalb 50° C, vorzugsweise bei einer Temperatur wenig über dem Gefrierpunkt des Reaktionsmediums, auf eine beständige Ausgangslösung von Aluminiumchlorid und/oder Aluminiumhydroxychloriden einwirken läßt. Die Produkte dieses Verfahrens sind jedoch als Flockungsmittel nicht genügend wirksam.

Bekannt ist auch das sogenannte Norwich-Verfahren, das beispielsweise in der Zeitschrift "Das Gas- und Wasserfach" 1977, Seite 29 ff. beschrieben ist. Bei diesem Verfahren werden Natriumsilikat und Aluminiumsulfat in Lösung mit einer Dosierpumpe zusammen mit Verdünnungswasser in eine Mischkammer gefördert und dort unter genau definierten Rührbedingungen zur Reaktion gebracht. Der Eintritt in das Mischgefäß erfolgt durch Stutzen im Boden der Mischkammer. Ein speziell entwickelter Rührer ist unmittelbar über den Eintrittsöffnungen am Boden der Mischkammer gelagert. Mittels eines Ejektors, der im oberen Drittel mit der Mischkammer verbunden ist, wird das Norwich-Sol im Treibwasserstrom zur Dosierstelle transportiert. Nachteilig an diesem Verfahren ist die starke Abhängigkeit der Eigenschaften dieses Produktes von der exakten Einhaltung der Verfahrensbedingungen und die Notwendigkeit, das Produkt unmittelbar nach seiner Entstehung anwenden zu müssen.

Aufgabe der vorliegenden Erfindung ist die Schaffung eines Verfahrens zur Herstellung eines flüssigen, wäßrigen anorganischen Flockungsmittels auf der Basis von Aluminiumhydroxychloriden, das einfacher durchführbar ist als die bekannten Verfahren und zu einem Produkt mit besseren Flockungseigenschaften führt.

Erfindungsgemäß wird diese Aufgabe durch ein Verfahren der oben bezeichneten Art gelöst, das dadurch gekennzeichnet ist, daß man eine wäßrige, saure Aluminiumchloridlösung unter Rühren mit einer wäßrigen Aluminiumsulfatlösung mischt, diese Mischung 6 - 12 bzw. 24 Stunden stehen läßt und anschließend in diese Mischung unter kräftigem, d.h. vehementen Rühren bei Raumtemperatur Natriummetasilikat einrührt oder eine wäßrige Ammoniaklösung oder eine 50 %ige Natronlauge langsam eintropfen läßt. Vorzugsweise so, daß kein Aluminiumhydroxid ausfällt.

Vorzugsweise werden

a) 1 Volumenteil Aluminiumchloridlösung, enthaltend etwa 40 - 80 g HCl pro Liter und etwa 15 - 30 g Al pro Liter, mit 0,2 - 0,4 Volumenteilen einer etwa 50 Gew.-%-igen Aluminiumsulfatlösung vermischt, die Mischung bei Raumtemperatur etwa 30 - 60 Minuten gerührt, danach 12 - 24 Stunden stehen gelassen;

b) eine etwa 5 - 10 Gew.-%-ige wäßrige Natriummetasilikatlösung hergestellt, die nach Zugabe des Natriummetasilikats etwa 15 - 30 Minuten gerührt und danach etwa 12 - 24 Stunden stehengelassen wird und

c) entweder in etwa 3 - 4 Gew.-Teile der gemäß a) erhaltenen Mischung etwa 1 Gew.-Teil der gemäß b) erhaltenen Natriummetasilikatlösung
oder in etwa 1,5 - 2,3 Volumenteile der gemäß a) erhaltenen Mischung etwa 1 Volumenteil einer ca. 2 - 6 %-igen wäßrigen Ammoniaklösung eingetropft.

Besonders vorteilhaft ist es, wenn man

a) 1 Volumenteil Aluminiumchloridlösung, enthaltend etwa 70 g HCl und etwa 20 g Al pro Liter, mit etwa 0,3 Volumenteilen etwa 50 Gew.-%-iger Aluminiumsulfatlösung mischt,

b) eine etwa 7 - 8 %-ige Natriummetasilikatlösung herstellt und

c) entweder in etwa 3,7 Gew.-Teile der Mischung gemäß a) etwa 1 Gew.-Teil Natriummetasilikatlösung gemäß b) oder in etwa 1,9 Volumenteilen der Mischung gemäß a) etwa 1 Volumenteil einer ca. 4 %-igen Ammoniaklösung eintropft.

Vorzugsweise werden

a) 1 Gewichtsteil Aluminiumchloridlösung enthaltend etwa 40 - 80 g HCl pro kg und etwa 20 - 40 g Al pro kg, mit 1 Gew. Teil einer 50 %igen Aluminiumsulfatlösung, enthaltend etwa 8 % $Al_2O_3$ vermischt. Die Mischung bei Raumtemperatur etwa 30 - 60 Minuten rühren, danach 6 - 12 bzw. 24 Stunden stehen lassen.

b) 2 Gewichtsteile einer etwa 50 %igen Aluminiumsulfatlösung, enthaltend etwa 8 % $Al_2O_3$ werden mit 1 Gew.-Teil Aluminiumchloridlösung, Inhaltsstoffe wie a) vermischt. Mischung und Standzeit der Lösung wie a).

c) 3 Gewichtsteile einer etwa 50 %igen Aluminiumsulfatlösung, enthaltend etwa 8 % $Al_2O_3$ werden mit 1 Gew.-Teil Aluminiumchloridlösung, Inhaltsstoffe wie a) vermischt. Mischung und Standzeit der Lösung wie a).

d) 4 Gewichtsteile einer etwa 50 %igen Aluminiumsulfatlösung, enthaltend etwa 8 % $Al_2O_3$ werden mit 1 Gew.-Teil Aluminiumchloridlösung, Inhaltsstoffe wie a) vermischt. Mischung und Standzeit der Lösung wie a).

e) 5 Gewichtsteile einer etwa 50 %igen Aluminiumsulfat-Lösung, enthaltend etwa 8 % $Al_2O_3$ werden mit 1 Gew.-teil Aluminiumchloridlösung, Inhaltsstoffe wie a) vermischt. Mischung und Standzeit der Lösung wie a).

1. 1 Gewichtsteil einer 50 %igen Aluminiumsulfatlösung, enthaltend etwa 8 % $Al_2O_3$ mit 1 Teil einer Aluminiumchloridlösung, Inhaltsstoffe wie a) vermischt. Mischung sowie Standzeit wie a).

2. 2 Gewichtsteile einer Aluminiumchloridlösung, Inhaltsstoffe wie a) mit 1 Gew.- Teil einer 50 %igen Aluminiumsulfatlösung, enthaltend etwa 3 % $Al_2O_3$ vermischt. Mischung sowie Standzeit der Lösung wie a).

3. 3 Gewichtsteile einer Aluminiumchloridlösung, Inhaltsstoffe wie a) mit 1 Gew.- Teil einer etwa 50 %igen Aluminiumsulfatlösung, enthaltend etwa 8 % $Al_2O_3$ vermischt. Mischung sowie Standzeit der Lösung wie a).

4. 4 Gewichtsteile einer Aluminiumchloridlösung, Inhaltsstoffe wie a) mit 1 Gew.- Teil einer etwa 50 %igen Aluminiumsulfatlösung, enthaltend etwa 8 % $Al_2O_3$ vermischt. Mischung sowie Standzeit der Lösung wie a).

5. 5 Gewichtsteile einer Aluminiumchloridlösung, Inhaltsstoffe wie a) mit 1 Gew.- Teil einer etwa 50 %igen Aluminiumsulfatlösung, enthaltend etwa 8 % $Al_2O_3$ vermischt. Mischung sowie Standzeit der Lösung wie a).

In die Mischungen a,b,c,d, und e sowie 1, 2,3, 4 und 5 werden unter vehementem Rühren bei Raumtemperatur,x.) 1 bis 30 Gewichtsprozente Natriummetasilikat 5-hydrat, 9-Hydrat oder wasserfrei hinzugefügt bzw. zudosiert, y) 1 bis 15 Gew. % einer wäßrigen Ammoniaklösung langsam eingetropft oder z.) 1 bis 15 Gew. % einer 50 %igen Natronlauge langsam eingetropft.

Nach erfolgter Zugabe bzw. Einmischung in die Stammlösung das Basifizierungsagens, 30 bis 180 Minuten vehement weitermischen. Anschließend erfolgt eine Filtration, um eventuelle Schwebstoffe zu entfernen.

Besonders vorteilhaft ist es, wenn

a) 3 Gew. Teile einer 50 %igen Aluminiumsulfatlösung, enthaltend etwa 8 % $Al_2O_3$ mit 1 Gew.- Teil Aluminiumchloridchloridlösung, enthaltend etwa 60 g HCl und etwa 30 g Al pro kg, mischt.

b) 15 Gew.% Natriummetasilikat 9-Hydrat zudosiert,

c) 7,5 Gew.% einer wäßrigen Ammoniaklösung langsam eintropft oder

d) 5 Gew.% einer 50 %igen Natronlauge ebenfalls langsam eintropft.

a.a) 3 Gewichtsteile einer Aluminiumchloridlösung, enthaltend etwa 60 g HCl und etwa 30 g Al pro kg, mit 1 Gew. Teil einer etwa 50 %igen Aluminiumsulfatlösung, enthaltend etwa 8 % $Al_2O_3$ mischt.

b.b) 15 Gew. % Natriummetasilikat 9-Hydrat zudosiert,

c.c) 7,5 Gew. % einer wäßrigen Ammoniaklösung langsam eintropft oder

d.d) 5 Gew.% einer 50 %igen Natronlauge ebenfalls langsam eintropft.

Das erfindungsgemäße Verfahren hat gegenüber den bekannten Verfahren den Vorteil, daß keine Erhitzungsstufen erforderlich sind, die Umsetzung in üblichen Reaktionsgefäßen mit üblichen Rührvorrichtungen erfolgen kann und dabei ein Produkt erhältlich ist, das ein stabiles Sol darstellt, welches ohne zu gelieren gut dosierbar ist und als Flockungsmittel bie der Aufbereitung von Brauchwasser, insbesondere von Schwimmbadwasser, eine sehr hohe Aktivität besitzt. Überraschenderweise ist es sogar in der Lage, Aminosäuren und Phosphate auszufällen.

Das nach dem erfindungsgemäßen Verfahren erhältliche Flockungsmittel ist normalerweise frei von Polyphosphaten oder von Phosphaten, frei von Fluorid und von nennenswerten Mengen organischer Substanzen. Die Dichte des wäßrigen Flockungsmittels kann im Bereich von beispielsweise 1,04 bis 1,3 liegen, sie kann jedoch auch außerhalb dieses Bereiches liegen, insbesondere wenn höher konzentrierte oder verdünntere Produkte vorliegen.

Der pH des Mittels liegt in der Regel im Bereich zwischen 1 und 5. Ein typisches Verfahrensprodukt enthält etwa:

| | | |
|---|---|---|
| Aluminium ($Al_2O_3$) | 100 - 150 | g/l |
| Chlorid | 45 - 115 | g/l |
| Silikat ($SiO_2$) | 3 - 25 | g/l |
| Sulfat ($SO_4^{=}$) | 70 - 210 | g/l |
| Eisen ($Fe^{3+}$) | 0,3 - 1,0 | g/l |
| Natrium ($Na^+$) | 25 - 30 | g/l |

Das erfindungsgemäß hergestellte Mittel kann außerdem geringe Mengen an Pb, Mn und As enthalten.

Die nachfolgenden Beispiele dienen zur weiteren Erläuterung der Erfindung:

Beispiel 1:
In ein 5 l - Becherglas gibt man 3 Gew. - Teile einer 50 %igen Aluminiumsulfatlösung, enthaltend etwa 8 % $Al_2O_3$. Zu dieser Lösung gibt man unter kräftigem Rühren bei Raumtemperatur 1 Gew.- Teil einer Aluminiumchloridlösung etwa folgender Zusammensetzung:

| | |
|---|---|
| HCl (freie Säure) | ca. 60 g/kg |
| Aluminiumgehalt | ca. 20 g Al/kg ( gelöst als $AlCl_3$) |
| Sulfat weniger als | 1 g/kg |

Eine derartige Lösung erhält man zum Beispiel aus der Ätzung von hochreinem Aluminium(Al 99,99%), dementsprechend niedrig ist auch der Gehalt an Verunreinigungen dieser Lösung.

Man rührt etwa 30 - 60 Minuten lang, danach wird die Lösung 6 - 12 bzw. 24 Stunden stehen gelassen.

x) nach dieser Standzeit werden mittels eines Pulverdosierers (Dosierschnecke) unter vehementem Mischen der Lösung 15 Gew. % Natriummetasilikat 9-Hydrat hinzugefügt und 60 Minuten weitergemischt.

y) Nach dieser Standzeit werden mittels eines Tropftrichters unter vehementem Mischen der Lösung 7,5 Gew.% einer wäßrigen Ammoniaklösung langsam eingetropft oder

z) nach dieser Standzeit werden ebenfalls mittels eines Tropftrichters unter vehementem Mischen der Lösung 5 Gew. % einer 50 %igen Natronlauge langsam eingetropft und 60 Minuten weiter gemischt. Danach wird filtriert.

Man erhält klare, leicht opaleszente Lösungen mit einem pH-Wert von 2,59 bis 2,82, einem spezifischen Gewicht (g/ccm) von 1,270 bis 1,277, einer Basizität von 39,2 bis 44,3 %, definiert als

$$\frac{(OH^-) \cdot 100}{Al^{3+}}$$

Diese Lösungen haben etwa folgende Zusammensetzung:

| | | | |
|---|---|---|---|
| Aluminium | ($Al_2O_3$) | g/l | 72,8 |
| | | val/l | 4,28 |
| | (Al) | g/l | 38,5 |
| Natrium | (Na) | g/l | 4,13 |
| | | val/l | 0,18 |
| Chlorid | ($Cl^-$) | g/l | 113 |
| | | val/l | 3,18 |
| Sulfat | ($SO_4^{2-}$) | g/l | 52 |
| | | val/l | 1,08 |
| Silikat | ($SiO_2$) | g/l | 2,8 |
| | | val/l | 0,046 |
| Eisen | (Fe) | mg/l | 328 |
| | | val/l | 0,02 |
| Blei | (Pb) | mg/l | 1,3 |
| Mangan | (Mn) | mg/l | 15 |
| Arsen | (As) | mg/l | 0,25 |
| Ammonium-N | | mg/l | 5,1 |

Beispiel 2:
In ein 5 l - Becherglas gibt man 3 Gew. Teile einer Aluminiumchloridlösung, etwa folgender Zusammensetzung:

| | |
|---|---|
| HCL (freie Säure) | ca. 60 g/kg |
| Aluminiumgehalt | ca. 20 g Al/kg (gelöst als $AlCL_3$) |
| Sulfat | weniger als 1 g/kg |

Zu dieser Lösung gibt man unter kräftigem Rühren bei Raumtemperatur 1 Gew. Teil einer 50 %igen Aluminiumsulfatlösung, enthaltend etwa 8 % $Al_2O_3$. Man rührt etwa 30 - 60 Minuten lang, danach wird die Lösung 5 - 12 bzw. 24 Stunden stehen gelassen.

x) Nach dieser Standzeit werden mittels eines Pulverdosierers (Dosierschnecke) unter vehementem Mischen der Lösung 15 Gew. % Natriummetasilikat-9Hydrat hinzugefügt und 60 Minuten weiter gemischt.

y) Nach dieser Standzeit werden mittels eines Tropftrichters unter vehementem Mischen der Lösung 7,5 Gew. % einer wäßrigen Ammoniaklösung langsam eingetropft und 60 Minuten weiter gemischt oder

z) nach dieser Standzeit werden ebenfalls mittels eines Tropftrichters unter vehementem Mischen der Lösung 5 Gew. % einer 50 %igen Natronlauge langsam eingetropft und 60 Minuten weiter gemischt. Danach filtrieren.

Man erhält klare, gelblich-braune Lösungen mit einem pH-Wert von 2,17 bis 2,37, einem spezifischen Gewicht (g/ccm) von 1,210 - 1,212, einer Basizität von 36,1 bis 60,6 %.

Die analytische Zusammensetzung ist folgende:

| | | |
|---|---|---|
| Aluminium ($Al_2O_3$) | g/l | 59,3 |
| | val/l | 3,49 |
| ($Al$) | g/l | 31,4 |
| Chlorid ($Cl^-$) | g/l | 101 |
| | val/l | 2,84 |
| Silikat ($SiO_2$) | mg/l | <5 |
| Sulfat ($SO_4^{2-}$) | mg/l | 183 |
| Eisen (Fe) | mg/l | 805 |
| | val/l | 0,04 |
| Blei (Pb) | mg/l | 0,08 |
| Mangan (Mn) | mg/l | 38 |
| Arsen (As) | mg/l | 0,08 |
| Ammonium-Stickstoff (N) | g/l | 11,9 |
| | val/l | 0,66 |

Berechnung der "Basizität":

Hydroxid ($OH^-$) val/l $= \Sigma(Al^{3+}, NH_4^+, Fe^{3+}) - (Cl^-)$

$= 4{,}19 - 2{,}84$

$= 1{,}35$

g/l $= 23{,}0$

$$\text{"Basizität"} = \frac{(OH^-) \times 100}{(Al^{3+})} = \frac{1{,}35}{3{,}49} = 38{,}7\%$$

Formel: $(Al\,Fe_{o,ol}\,(NH_4)_{o,57}\,Cl_{2,45}\,(OH)_{1,16})_n$

Die erfindungsgemäß erhältlichen Produkte eignen sich sehr gut zur Flockungsreinigung von Wasser, insbesondere von Schwimmbadwasser. Die unerwünschten Wasserinhaltsstoffe, insbesondere Trübstoffe, werden an die Flocke gebunden und mit dieser ausgeschieden. Als mehrkerniger Aluminiumkomplex bildet das Produkt große, gut sedimentierende Fällungsflocken. Bei der praktischen Anwendung werden ca. 0,5 g - 10 g der in den Beispielen beschriebenen Stammlösung pro $m^3$ Wasser verwendet. Bei Badewasser benötigt man meist weniger als 1 $g/m^3$. Man gibt die Lösung zweckmäßigerweise über eine Dosieranlage an der Saugseite der Umwälzpumpe in das Schwimmbadwasser. Aufgrund der hohen Flockungsgeschwindigkeit können direkt gut ausgebildete Flocken im Filter abgetrennt werden.

Die erfindungsgemäß erhältlichen Präparate wirken in keiner Weise toxisch und sind physiologisch absolut verträglich.

Das erfindungsgemäße Verfahren ist wesentlich einfacher und billiger durchführbar, als die bekannten Verfahren, da Filtrierprozesse und Erhitzungsphasen nicht erforderlich sind und die Herstellung in üblichen Reaktionsgefäßen ohne großen apparativen Aufwand erfolgen kann. Die erhaltenen Produkte sind trotzdem stabil, sie neigen nicht zur Gelbildung und können längere Zeit gelagert werden.

Eine sehr reizvolle Verarbeitungsvariante ergibt sich, wenn man die der Mischung zugegebenen Stoffe und hier wiederum das pulverförmige Natriummetasilikat insoweit leichtgewichtig und unter geringem Volumenbedarf in entsprechend einfach zu haltenden Verpackungen an den Ort der Verwendung transportiert und erst dort der dort zur Verfügung zu stellenden Mischung beigibt.

# PATENTANSPRÜCHE

1. Verfahren zur Herstellung eines flüssigen, wäßrigen anorganischen Flockungsmittels auf der Basis von Aluminiumhydroxychloriden durch Umsetzung eines Aluminiumsalzes mit einem basifizierenden Reagens, dadurch gekennzeichnet, daß man eine wäßrige, saure Aluminiumchloridlösung unter Rühren mit einer wäßrigen Aluminiumsulfatlösung mischt, diese Mischung 6 bis 12 bzw. 24 Stunden stehen läßt und anschließend in diese Mischung unter kräftigem Rühren bei Raumtemperatur Natriummetasilikat und/oder eine wäßrige Ammoniaklösung und/oder eine 50 %-ige Natronlauge zugibt bzw. eintropfen läßt, so daß kein Aluminiumhydroxid ausfällt.

2. Verfahren nach Anspruch 1, dadurch gekennzeichnet, daß das Natriummetasilikat in Pulverform zugeführt wird.

3. Verfahren nach Anspruch 1, dadurch gekennzeichnet, daß das Natriummetasilikat als Lösung in demineralisiertem Wasser zugeführt wird.

4. Verfahren nach einem der Ansprüche 1 bis 3, dadurch gekennzeichnet, daß die Ammoniaklösung verdünnt ist.

5. Verfahren nach einem der Ansprüche 1 bis 4, dadurch gekennzeichnet, daß man

   a) 1 Volumenteil Aluminiumchloridlösung, enthaltend etwa 40 - 80 g HCl pro Liter und etwa 15-30 g Al pro Liter mit
   0,2 bis 04 Volumenteilen einer etwa 50 Gew.-%-igen Aluminiumsulfatlösung mischt, die Mischung bei

Raumtemperatur etwa 30 bis 60 Minuten rührt, danach etwa 12 bis 24 Stunden stehen läßt;

b) eine etwa 5 bis 10 Gew.-%-ige wäßrige Natriummetasilikatlösung herstellt, die nach Zugabe des Natriummetasilikats etwa 15 bis 30 Minuten gerührt und danach etwa 12 bis 24 Stunden stehen gelassen wird und

c) entweder in etwa 3 bis 4 Gew.-Teile der gemäß a) erhaltenen Mischung etwa 1 Gew.-Teil der gemäß b) erhaltenen Mischung etwa 1 Volumenteil einer ca. 2 bis 6-%-igen wäßrigen Ammoniaklösung eintropft.

6. Verfahren nach Anspruch 5, dadurch gekennzeichnet, daß man

a) 1 Volumenteil Aluminiumchloridlösung, enthaltend etwa 70 g HCl und etwa 20 g Al pro Liter mit etwa 0,3 Volumenteilen etwa 50 Gew.-%-iger Aluminiumsulfatlösung mischt,

b) eine etwa 7 bis 8 %-ige Natriummetasilikatlösung herstellt und

c) entweder in etwa 3,7 Gew.-Teile der Mischung gemäß a) etwa 1 Gew.-Teil Natriummetasilikatlösung gemäß b)

oder in etwa 1,9 Volumenteile der Mischung gemäß a) etwa 1 Volumenteil einer ca. 4 %-igen Ammoniaklösung eintropft.

7. Verfahren nach einem der Ansprüche 1 bis 6, dadurch gekennzeichnet, daß ein Gewichtsteil einer

etwa 50 %-igen Aluminiumsulfatlösung, enthaltend etwa 8 % $Al_2O_3$ mit einem Gewichtsteil Aluminiumchloridlösung, enthaltend etwa 40 - 80 g HCl pro kg und etwa 20 - 40 g Al pro kg vermischt, die Mischung bei Raumtemperatur etwa 30 bis 60 Minuten gerührt und danach 6 bis 12 bzw. 24 Stunden stehen gelassen wird.

8. Verfahren nach einem der Ansprüche 1 bis 6, dadurch gekennzeichnet, daß zwei Gewichtsteile einer etwa 50 %-igen Aluminiumsulfatlösung, enthaltend etwa 8 % $Al_2O_3$ mit einem Gewichtsteil Aluminiumchloridlösung, enthaltend etwa 40 - 80 g HCl pro kg und etwa 20 bis 40 g Al pro kg vermischt, die Mischung bei Raumtemperatur etwa 30 bis 60 Minuten gerührt und danach 6 bis 12 bzw. 24 Stunden stehen gelassen wird.

9. Verfahren nach einem der Ansprüche 1 bis 6, dadurch gekennzeichnet, daß drei Gewichtsteile einer etwa 50 %-igen Aluminiumsulfatlösung, enthaltend etwa 8 % $Al_2O_3$ mit einem Gewichtsteil Aluminiumchloridlösung enthaltend etwa 40 - 80 g HCl pro kg und etwa 20 bis 40 g Al pro kg vermischt, die Mischung bei Raumtemperatur etwa 30 bis 60 Minuten gerührt und danach 6 bis 12 bzw. 24 Stunden stehen gelassen wird.

10. Verfahren nach einem der Ansprüche 1 bis 6, dadurch gekennzeichnet, daß vier Gewichtsteile einer etwa 50 %-igen Aluminiumsulfatlösung, enthaltend etwa 8 % $Al_2O_3$ mit einem Gewichtsteil Aluminiumchloridlösung enthaltend etwa 40 - 80 g HCl pro kg und etwa 20 bis 40 g Al pro kg vermischt, die Mischung bei Raumtemperatur etwa 30 bis 60 Minuten gerührt und danach 6 bis 12 bzw. 24 Stunden stehen gelassen wird.

11. Verfahren nach einem der Ansprüche 1 bis 6, d a d u r c h g e k e n n z e i c h n e t , daß fünf Gewichtsteile einer etwa 50 %-igen Aluminiumsulfatlösung, enthaltend etwa 8 % $Al_2O_3$ mit einem Gewichtsteil Aluminiumchloridlösung enthaltend etwa 40 - 80 g HCl pro kg und etwa 20 bis 40 g Al pro kg vermischt, die Mischung bei Raumtemperatur etwa 30 bis 60 Minuten gerührt und danach 6 bis 12 bzw. 24 Stunden stehen gelassen wird.

12. Verfahren nach einem der Ansprüche 1 bis 6, d a d u r c h g e k e n n z e i c h n e t , daß ein Gewichtsteil einer Aluminiumchloridlösung, enthaltend etwa 40 - 80 g HCl pro kg und etwa 20 - 40 g Al pro kg mit einem Gewichtsteil einer 50 %-igen Aluminiumsulfatlösung, enthaltend etwa 8 % $Al_2O_3$, vermischt, die Mischung bei Raumtemperatur etwa 30 - 60 Minuten gerührt und danach 6 - 12 bzw. 24 Stunden stehen gelassen wird.

13. Verfahren nach einem der Ansprüche 1 bis 6, d a d u r c h g e k e n n z e i c h n e t , daß zwei Gewichtsteile einer Aluminiumchloridlösung, enthaltend etwa 40 - 80 g HCl pro kg und etwa 20 - 40 g Al pro kg mit einem Gewichtsteil einer 50 %-igen Aluminiumsulfatlösung, enthaltend etwa 8 % $Al_2O_3$, vermischt, die Mischung bei Raumtemperatur etwa 30 - 60 Minuten gerührt und danach 6 - 12 bzw. 24 Stunden stehen gelassen wird.

14. Verfahren nach einem der Ansprüche 1 bis 6, d a d u r c h g e k e n n z e i c h n e t , daß drei Gewichtsteile einer Aluminiumchloridlösung enthaltend etwa 40 - 80 g HCl pro kg und etwa 20 - 40 g Al pro kg mit einem Gewichtsteil einer 50 %-igen Aluminiumsulfatlösung, enthaltend etwa 8 % $Al_2O_3$, vermischt, die Mischung bei Raumtemperatur etwa 30 - 60 Minuten gerührt und danach 6 - 12 bzw. 24 Stunden stehen gelassen wird.

Verfahren nach einem der Ansprüche 1 bis 6, dadurch gekennzeichnet, daß vier Gewichtsteile einer Aluminiumchloridlösung enthaltend etwa 40 - 80 g HCl pro kg und etwa 20 - 40 g Al pro kg mit einem Gewichtsteil einer 50 %-igen Aluminiumsulfatlösung, enthaltend etwa 8 % $Al_2O_3$, vermischt, die Mischung bei Raumtemperatur etwa 30 - 60 Minuten gerührt und danach 6 - 12 bzw. 24 Stunden stehen gelassen wird.

Verfahren nach einem der Ansprüche 1 bis 6, dadurch gekennzeichnet, daß fünf Gewichtsteile einer Aluminiumchloridlösung enthaltend etwa 40 - 80 g HCl pro kg und etwa 20 - 40 g Al pro kg mit einem Gewichtsteil einer 50 %-igen Aluminiumsulfatlösung, enthaltend etwa 8 % $Al_2O_3$, vermischt, die Mischung bei Raumtemperatur etwa 30 - 60 Minuten gerührt und danach 6 - 12 bzw. 24 Stunden stehen gelassen wird.

. Verfahren nach einem der Ansprüche 7 bis 16, dadurch gekennzeichnet, daß der Mischung unter starkem Rühren Raumtemperatur 1 bis 30 Gewichtsprozente Natriummetasilikat 5-hydrat, 9-hydrat oder wasserfrei hinzugefügt bzw. zudosiert oder 1 bis 15 Gewichtsprozent einer wäßrigen Ammoniaklösung langsam eingetropft oder 1 bis 15 Gewichtsprozent einer 50 %-igen Natronlauge langsam eingetropft werden.

i. Verfahren nach Anspruch 17, dadurch gekennzeichnet, daß die Mischung 30 bis 180 Minuten vehement weitergemischt und anschließend eventuelle Schwebstoffe herausfiltriert werden.

9. Verwendung des nach den Ansprüchen 1 bis 18 enthaltenen Flockungsmittels für die Wasseraufbereitung.

0. Verfahren zur Herstellung des Flockungsmittels nach Anspruch 19 unter Hinzugabe des Natriummetasilikates in pulverförmiger Form oder der wäßrigen Ammoniaklösung oder Natronlauge in konzentrierter Form am Ort der Verwendung.